# FASCICULE DE BREVET EUROPEEN

(11) **EP 2 188 178 B1**
(45) Date de publication et mention de la délivrance du brevet: **25.12.2013**
(21) Numéro de dépôt: 08828682.8
(22) Date de dépôt: 12.06.2008
(51) Int. Cl.: B64D 29/08

(54) **NACELLE DE TURBORÉACTEUR, DESTINÉE À ÉQUIPER UN AÉRONEF**
TRIEBWERKSGONDEL ZUM EINBAU IN EIN FLUGZEUG
JET ENGINE NACELLE INTENDED TO EQUIP AN AIRCRAFT

(30) Priorité: 20.08.2007 FR 0705921
(43) Date de publication de la demande: 26.05.2010
(73) Titulaire: Aircelle, 76700 Gonfreville l'Orcher (FR)
(72) Inventeur: BOURDON, Gilles, F-76000 Le Havre (FR)
(74) Mandataire: Chevalier, Renaud Philippe
(86) Numéro de dépôt international: PCT/FR2008/000809
(87) Numéro de publication internationale: WO 2009/027587

(56) Documents cités:
- FR-A- 2 772 342

## Description

L'invention se rapporte à une nacelle de turboréacteur, destinée à équiper un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle présente généralement une structure externe qui définit, avec une structure interne concentrique, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la nacelle est usuellement formée d'une première et d'une deuxième demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles sont généralement montées pivotantes autour d'un axe longitudinal formant charnière en partie supérieure (à 12 heures) de la nacelle. Les demi-coquilles sont maintenues en position de fermeture au moyen de dispositifs de verrouillage disposés le long d'une ligne de jonction située en partie inférieure (à 6 heures).

Le déploiement de chaque demi-coquille est assuré par l'intermédiaire d'un vérin dont une extrémité est fixe et reliée au turboréacteur, et dont l'autre extrémité est reliée à la coquille, au niveau d'une partie supérieure ou à 12 heures de celle-ci, en un point légèrement décalé par rapport à l'axe d'articulation.

Les sections médiane et arrière sont, de manière classique, reliées l'une à l'autre par un cadre, les première et seconde demi-coquilles étant généralement équipées de moyens de positionnement coopérant en position de travail avec des moyens de positionnement complémentaires ménagés sur le cadre. Cet état de l'art est illustré par le document FR-A-2 772 342 dont le préambule de la revendication indépendante reprend les caractéristiques techniques.

Une nacelle de ce type présente les inconvénients exposés ci-après.

Lors de l'ouverture de la nacelle, c'est-à-dire lors de l'écartement des deux demi-coquilles l'une par rapport à l'autre, chaque demi-coquille a tendance à se déformer. Une telle déformation est accentuée par la position du vérin et les réactions d'efforts associés. En outre, les opérations de maintenance peuvent être effectuées à l'extérieur, de sorte que la présence de vent accentue encore les déformations des demi-coquilles déployées.

On rappellera qu'en général, les axes de rotation sont rattachés à la partie arrière de la section arrière, dans la zone de jonction supérieure de chaque demi-coquille.

Ainsi, lorsque la nacelle est en position de maintenance, les extrémités des demi-coquilles disposées au niveau de la zone de jonction inférieure et au niveau de l'interface entre la section arrière et la section médiane, se déplacent vers le bas et en direction du turboréacteur.

Ces extrémités soumises à de forts déplacements peuvent alors interférer avec les autres parties de la nacelle, en particulier à cause du déplacement des extrémités en direction du turboréacteur.

Afin de limiter un tel déplacement de ces extrémités, il est connu d'équiper chaque demi-coquille avec au moins un premier élément suiveur au niveau d'une zone située à distance de l'axe de rotation, la nacelle étant équipée d'un premier élément de guidage fixe, le premier élément suiveur étant conçu pour être en appui contre le premier élément de guidage lors de la rotation de la première demi-coquille.

De cette manière, le déplacement de la zone située à distance de l'axe de rotation est limité par l'appui de l'élément suiveur sur la came fixe qui délimite la déformation maximale de chaque demi-coquille.

Ce type de nacelle nécessite toutefois l'utilisation d'un élément de guidage de grande longueur puisque que celui-ci doit accompagner le déplacement de l'élément suiveur sur une partie significative de la course angulaire de la demi-coquille correspondante.

L'encombrement important nécessite des modifications structurelles des autres éléments environnants constitutifs de la nacelle.

L'invention vise à remédier à cet inconvénient en proposant une nacelle dont l'encombrement de l'élément de guidage est réduit.

A cet effet, l'invention concerne une nacelle de turboréacteur, destinée à équiper un aéronef, comprenant une section avant d'entrée d'air, une section médiane destinée à entourer une soufflante du turboréacteur, et une section arrière formée à partir d'au moins une première et une seconde demi-coquilles-montées mobiles en rotation sur un axe de manière à pouvoir se déployer chacune entre une position de travail dans laquelle les demi-coquilles sont rapprochées l'une de l'autre et une position de maintenance dans laquelle les demi-coquilles sont écartées l'une de l'autre, la première demi-coquille au moins étant équipée d'un premier élément suiveur au niveau d'une zone située à distance de l'axe de rotation, le premier élément suiveur étant conçu pour être en appui contre un premier élément de guidage fixe par rapport au turboréacteur lors de la rotation de la première demi-coquille, caractérisée en ce que la première demi-coquille est équipée d'un second élément suiveur, décalé angulairement du premier élément suiveur par rapport à l'axe de rotation de la première demi-coquille, conçu pour être en appui contre un second élément de guidage fixe lors de la rotation de la première demi-coquille, caractérisée en ce que le premier et/ou le second éléments suiveurs sont conçus pour prendre appui contre le premier et/ou le second éléments de guidage sur une partie seulement de la course de la première demi-coquille, et en ce que, en position de travail de la nacelle, le premier et le second éléments suiveurs sont en retrait des premier et second éléments de guidage.

De cette manière, la limitation du mouvement de la zone située à distance de l'axe de rotation est assurée lors de l'écartement des deux demi-coquilles, tout d'abord par le premier élément suiveur prenant appui contre le premier élément de guidage, puis par le second élément suiveur décalé par rapport au premier et prenant appui contre le second élément de guidage. La longueur de chacun des éléments de guidage peut donc être réduite, de sorte que l'encombrement général de l'ensemble de ces moyens de guidage est réduit.

De préférence, la seconde demi-coquille est également équipée de moyens suiveurs et de moyens de guidage similaires.

Selon une caractéristique de l'invention, les premier et second éléments suiveurs comportent respectivement un premier et un second plots en saillie, les premier et second moyens de guidage comportant au moins une rampe d'appui contre laquelle les premier et second plots prennent appui lors de la rotation de la première demi-coquille.

Avantageusement, la rampe d'appui est une rampe d'appui unique présentant une première et une seconde sections disposées dans le prolongement l'une de l'autre et définissant une première et une seconde faces de guidage formant respectivement le premier et le second éléments de guidage, le premier plot venant en appui contre la première face de guidage au moins, le second plot venant en appui contre la seconde face de guidage au moins.

Selon une possibilité de l'invention, les première et seconde faces de guidage forment un angle l'une par rapport à l'autre.

Le premier et/ou le second éléments suiveurs sont conçus pour prendre appui contre le premier et/ou le second éléments de guidage sur une partie seulement de la course de la première demi-coquille.

Au-delà d'un écartement déterminée de la première coquille, l'extrémité précitée de la première coquille est suffisamment en retrait par rapport aux autres éléments de la nacelle. Par conséquent, le problème précité de l'interaction entre la première demi-coquille et les autres éléments de la nacelle ne se pose que pour une partie seulement de la course angulaire de la nacelle. Les éléments suiveurs et de guidage remplissent donc leur fonction sur une partie seulement de la course de la première demi-coquille de sorte qu'il est possible de limiter encore l'encombrement de ces éléments.

Selon une caractéristique de l'invention, en position de travail de la nacelle, le premier et le second éléments suiveurs sont en retrait des premier et second éléments de guidage.

Les éléments suiveurs et de guidage n'ont donc pas d'effet en position de travail, c'est-à-dire n'influe pas sur la nacelle durant le vol de l'aéronef. En position de travail, le positionnement de chaque demi-coquille est assuré de manière classique par une gorge annulaire et une nervure complémentaire.

Préférentiellement, la première demi-coquille est déplaçable en rotation sur une course angulaire comprise entre 40 et 60°, le premier et le second éléments suiveurs coopérant avec le premier et le second éléments de guidage sur une course angulaire comprise entre 5 et 10°, préférentiellement de l'ordre de 7 °.

Selon une possibilité de l'invention, la position de travail est repérée par une position angulaire à 0°, la position de maintenance étant repérée par une position angulaire comprise entre 30 et 60°, les éléments suiveurs et les éléments de guidage étant agencés de sorte que le premier élément suiveur prend appui contre le premier élément de guidage dans une position angulaire comprise environ entre 0,3° et 4 °, le second élément suiveur prenant appui contre le second élément de guidage dans une position angulaire comprise environ entre 4 et 7°.

Il est alors assuré que le premier élément de guidage assure le positionnement de la première demi-coquille lorsque la nervure annulaire précitée est désengagée de la gorge complémentaire. En outre, de cette manière, la nervure est correctement positionnée en regard de la gorge lors du rapprochement des demi-coquilles ce qui permet de leur éviter une usure prématurée. Ceci est d'autant plus important que la gorge et la nervure de positionnement sont des éléments soumis à de fortes contraintes durant le vol et sont donc des pièces dites sensibles.

Avantageusement, le premier et le second éléments de guidage sont fixés à un cadre fixe par rapport au turboréacteur permettant de rattacher la section arrière à la section médiane.

Selon une caractéristique de l'invention, la rampe d'appui présente une première et une seconde extrémités, les premier et second plots se déplaçant le long de la rampe dans le sens de la première extrémité vers la seconde extrémité, lors du déplacement de la première demi-coquille depuis la position de travail vers la position de maintenance, la seconde extrémité étant écartée radialement vers l'extérieur par rapport à la première extrémité.

Préférentiellement, la seconde extrémité est écartée de la première extrémité en direction de la section médiane.

La forme de la rampe d'appui, bien que limitant la déformation de la première demi-coquille, accompagne tout de même dans une certaine mesure la déformation naturelle de la demi-coquille lors de son déploiement en position de maintenance.

L'invention concerne en outre un aéronef, caractérisé en ce qu'il comporte une nacelle selon l'invention.

De toute façon, l'invention sera bien comprise à l'aide de la description qui suit en référence au dessin schématique annexé représentant, à titre d'exemple, une forme de réalisation de cette nacelle.
Figure 1 est une vue schématique d'une nacelle en coupe longitudinale ;
Figure 2 est une vue éclatée de la section arrière de la nacelle, en perspective ;

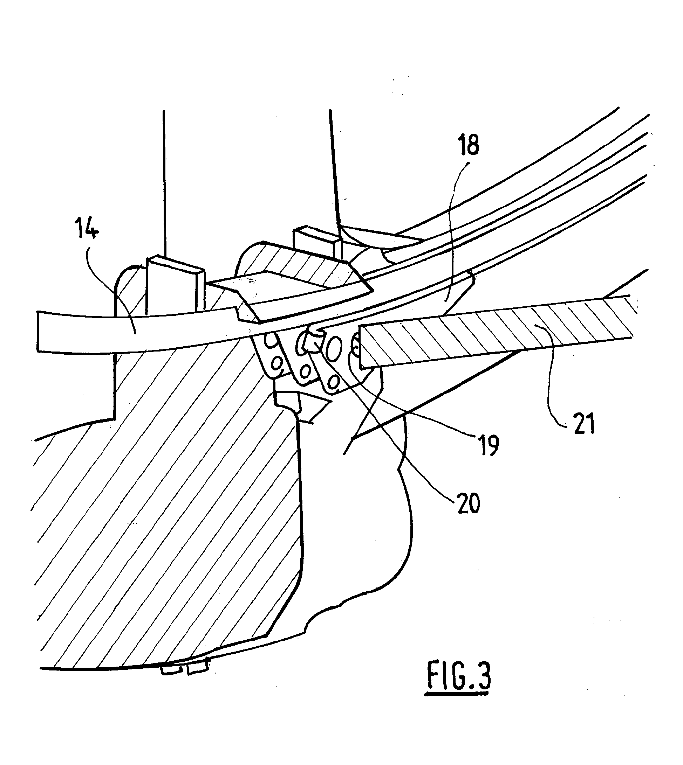

Figure 3 est une vue agrandie, en perspective, de la zone de la première demi-coquille située à distance de l'axe de rotation ;
Figure 4 en est une vue de côté ;
Figures 5 à 7 en sont des vues de dessous, dans trois positions successives de la première demi-coquille.

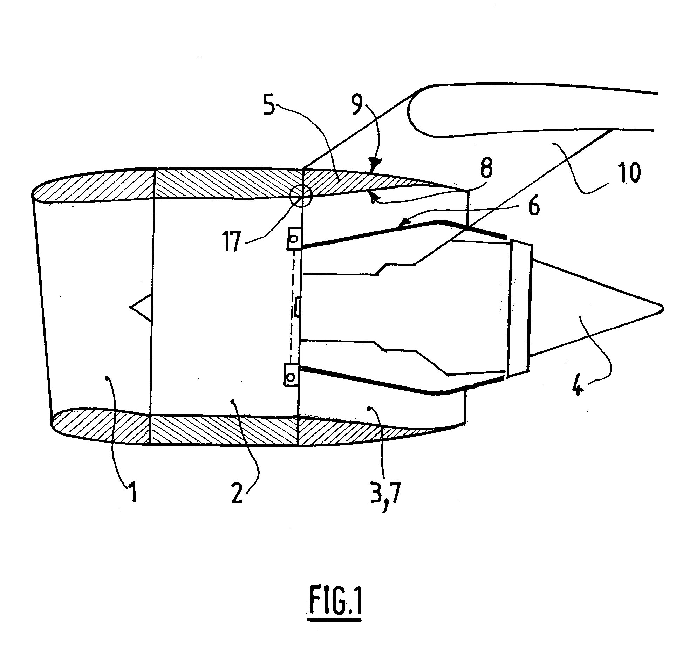

La figure 1 représente une nacelle selon l'invention, destinée à équiper un aéronef. Celle-ci présente une structure tubulaire comprenant une entrée d'air 1 en avant du turboréacteur, une section médiane 2 destinée à entourer une soufflante du turboréacteur, une section arrière 3 pouvant abriter des moyens d'inversion de poussée et destinée à entourer la chambre de combustion du turboréacteur, et est terminée par une tuyère d'éjection 4 dont la sortie est située en aval du turboréacteur.

La nacelle est destinée à abriter un turboréacteur double flux apte à générer par l'intermédiaire des pâles de la soufflante en rotation un flux d'air chaud (également appelé flux primaire) issu de la chambre de combustion du turboréacteur.

La nacelle présente une structure externe 5 qui définit, avec une structure interne concentrique 6, un canal annulaire d'écoulement 7, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

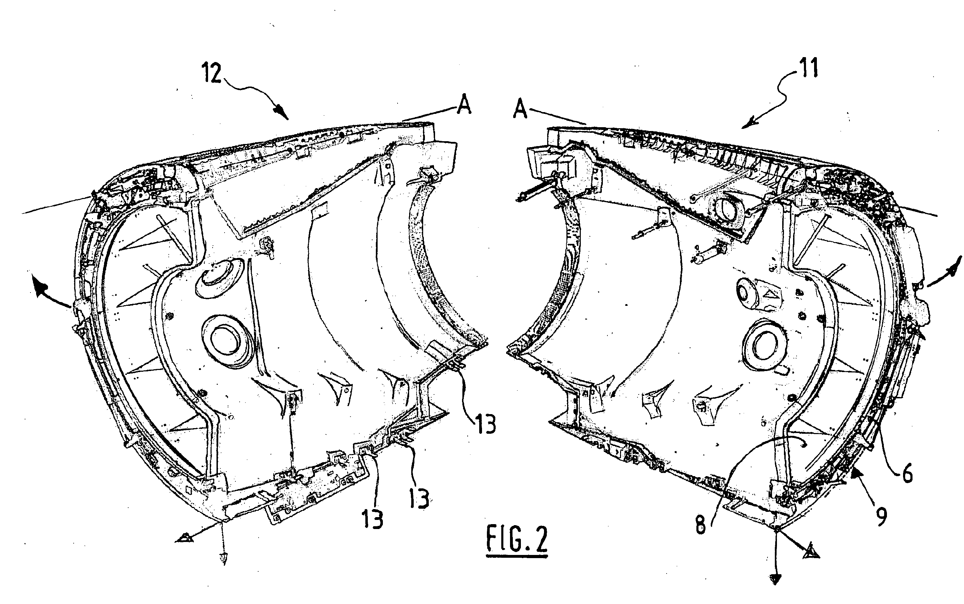

Comme cela apparaît plus particulièrement à la figure 2, la structure externe 5 comporte un capot interne 8 et un capot externe 9.

Chaque ensemble propulsif de l'aéronef est ainsi formé par une nacelle et un turboréacteur, et est suspendu à une structure fixe de l'aéronef, par exemple sous une aile ou sur le fuselage, par l'intermédiaire d'un pylône ou mât 10 rattaché au turboréacteur ou à la nacelle.

Comme cela apparaît à la figure 2, la section arrière 5 de la nacelle est formée d'une première et d'une deuxième demi-coquilles 11, 12 de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles 11, 12 sont chacune montées pivotantes autour d'un axe A, formant charnière en partie supérieure (à 12 heures) de la nacelle. Les demi-coquilles sont maintenues en position de fermeture au moyen de dispositifs de verrouillage 13 disposés le long d'une ligne de jonction située en partie inférieure (à 6 heures).

Les sections médiane et arrière 2, 3 sont, de manière classique, reliées l'une à l'autre par un cadre fixe 14 par rapport au turboréacteur, les première et seconde demi-coquilles étant équipées de moyens de positionnement coopérant en position de travail avec des moyens de positionnement complémentaires ménagés sur le cadre fixe.

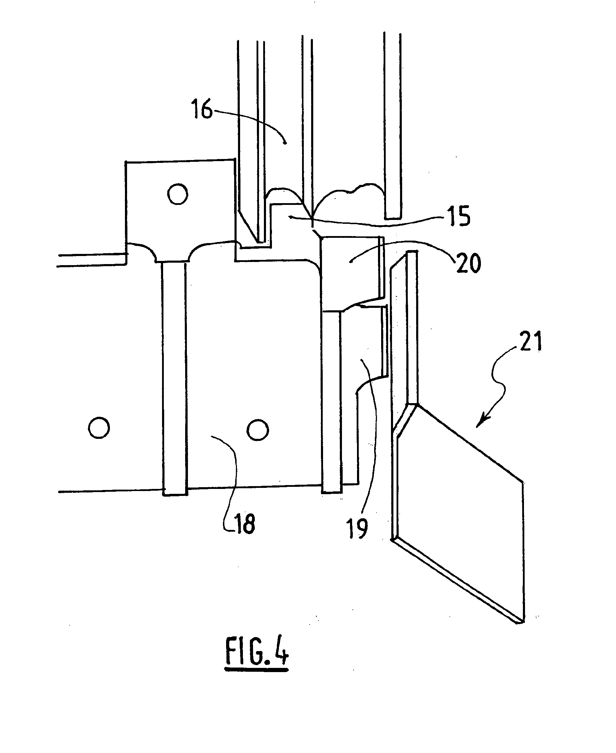

Comme cela ressort plus particulièrement à la figure 4, les moyens de positionnement comportent une nervure annulaire biseautée 15, de profil général en V, les moyens de positionnement complémentaires présentant une gorge 16 de forme et de profil complémentaires.

La nervure annulaire 15 est disposée plus particulièrement au niveau du bord avant 17 du capot interne 8 de la structure externe 5.

Chaque demi-coquille est équipée, au niveau du bord avant 17 du capot interne 8, d'une platine 18 disposée au niveau de l'extrémité inférieure du capot interne 8 de la structure externe 5.

La platine 18 est équipée d'un premier et d'un second plot suiveurs 19, 20 faisant saillie en direction de la section médiane 2. Le second plot 20 est décalé angulairement du premier 19 par rapport à l'axe de rotation A de la demi-coquille correspondante. Le second plot 20 est disposé au niveau de l'extrémité inférieure du capot interne 8 précité, c'est-à-dire à proximité de la demi-coquille opposée, le premier plot 19 étant alors situé plus en retrait de celle-ci.

En outre, l'ensemble propulsif formé par la nacelle et le turboréacteur est équipé d'une rampe de guidage 21 fixe par rapport au turboréacteur et rattachée au cadre fixe 14.

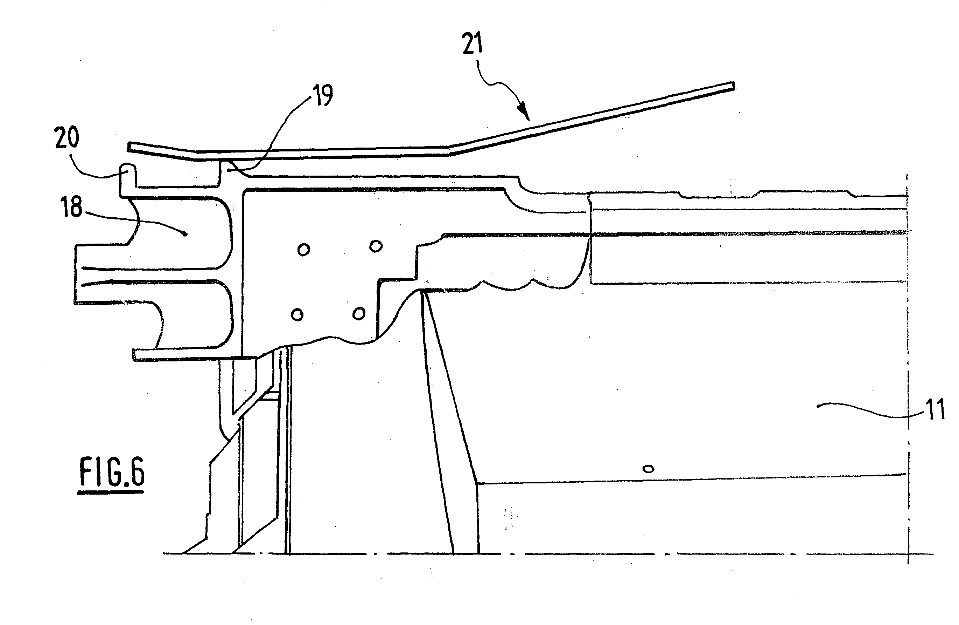

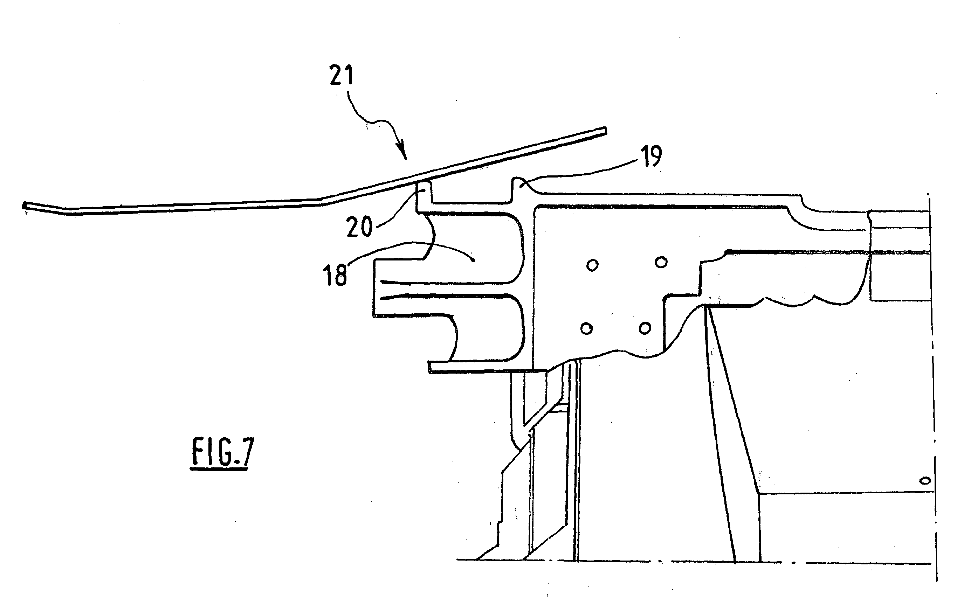

Comme cela apparaît plus particulièrement aux figures 4 à 7, la rampe 21 comporte une première extrémité 22, tournée du côté de la demi-coquille opposée et une seconde extrémité 23, opposée à la première.

La rampe 21 délimite trois sections distinctes, à savoir successivement une section d'engagement 24 disposée au niveau de la première extrémité 21, une première section d'appui 25 et une seconde section d'appui 26, cette dernière étant disposée au niveau de la seconde extrémité 23.

La rampe 21 présente ainsi trois faces planes tournées vers la section arrière contre lesquelles prennent appui les plots suiveurs comme cela est détaillé ci-après, à savoir une face d'engagement 27, une première face de guidage 28 et une seconde face de guidage 29.

La seconde face de guidage 29 forme un angle avec la première face de guidage 28. Plus particulièrement, la première face de guidage 28 est sensiblement parallèle à la face avant de section arrière 3, la seconde face de guidage 29 étant inclinée en direction de la section médiane 2.

De même, la face d'engagement 27 est inclinée en direction de la section médiane 2.

En outre, la seconde extrémité 23 est écartée radialement vers l'extérieur par rapport à la première extrémité 22, de manière à accompagnée la déformation de la demi-coquille correspondante, comme cela est détaillé ci-après.

Selon une variante de réalisation, la rampe 21 pourrait être courbe sans présenter de sections planes distinctes.

Le fonctionnement de la nacelle va maintenant être décrit plus en détail.

Lorsque la nacelle est en position de travail, les demi-coquilles 11, 12 sont rapprochées l'une de l'autre et la nervure annulaire 15 de chaque demi-coquille est logée à l'intérieur de la gorge correspondante 16.

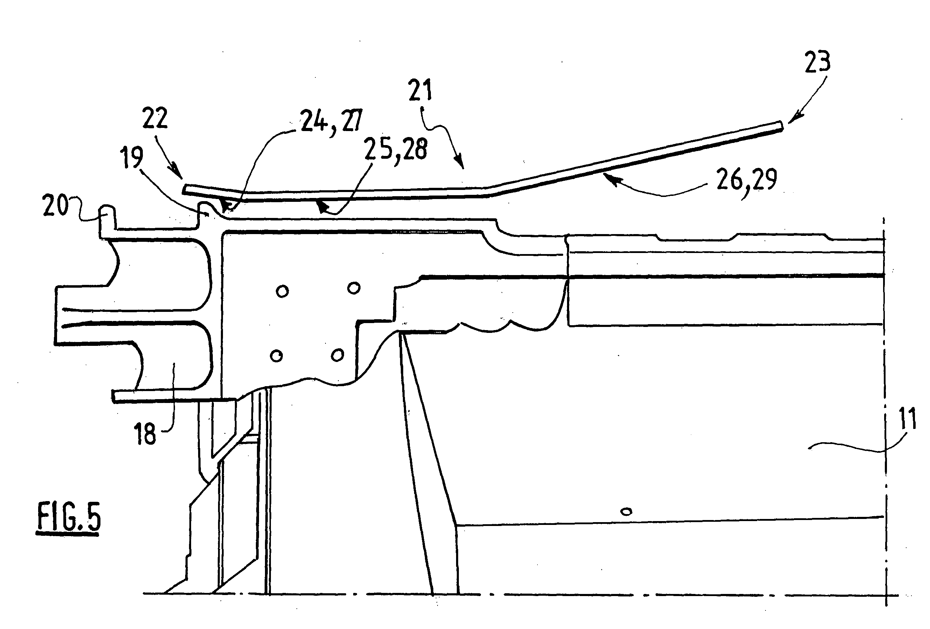

Comme cela est représentée en figure 5, les plots suiveurs 19, 20 ne sont pas en appui contre la rampe 21 en position de travail, le maintien en position des demi-coquilles étant assurée par les nervures et gorges précitées 15, 16.

Lors d'une opération de maintenance, il est nécessaire de déplacer en rotation au moins l'une des deux demi-coquilles, entre la position de travail repérée par une position angulaire à 0° et la position de maintenance, repérée par une position angulaire comprise entre 30 et 50°.

Dans une première phase d'écartement, par exemple de la première demi-coquille 11, celle-ci se déplace de la position à 0°C vers une position à 0,3° de manière à dégager la nervure annulaire 15 de la gorge correspondante 16. Le premier plot 19 vient alors prendre appui contre la face d'engagement 27 et la première demi-coquille 11 est alors susceptible de se déformer légèrement, la déformation étant toutefois limitée par l'appui du premier plot 19 sur la rampe 21.

Dans une deuxième phase d'écartement, la première demi-coquille 11 se déplace de sa position à 0,3 ° vers une position à 4°. Dans cette deuxième phase d'écartement, le premier plot 19 se déplace le long de la première face de guidage 28, puis le second plot 20 vient également en appui contre la première face de guidage 28, puis enfin le premier plot 19 se dégage de la première face de guidage 28.

Dans une troisième phase d'écartement, la première demi-coquille se déplace de sa position à 4 ° vers une position à 7°. Dans cette troisième phase d'écartement, le second plot 20 vient au contact de la seconde face de guidage 29 et se déplace le long de celle-ci jusqu'à atteindre la seconde extrémité 23 de la rampe 21. La seconde face de guidage 29 s'évasant en direction de la section médiane 2, la première demi-coquille 11 est déformée progressivement lors de la rotation de celle-ci, à la fois vers la section médiane 2 et vers le bas. La seconde extrémité 23 étant décalée radialement vers l'extérieur, la rampe 21 per met d'accompagner le déplacement radial vers l'extérieur du second plot 20.

Dans la position à 7°, le second plot 20 quitte la rampe 21 au niveau de la seconde extrémité 23 de sorte que la déformation de la première demi-coquille 11 n'est plus limitée par la rampe 21. Les plots suiveurs 19, 20 et la rampe 21 sont conçus de sorte que la position à 7° correspond à la déformation maximale de la première demi-coquille 11. De cette manière, lorsque le second plot suiveur 20 quitte la rampe 21, la première demi-coquille 11 n'a pas tendance à se déformer d'avantage. Ceci permet, lors du déplacement de la première demi-coquille 11 de sa position de maintenance à sa position de travail, d'assurer que le second plot 21 peut à nouveau s'engager correctement contre la seconde face de guidage 29.

Ainsi, les plots suiveurs 19, 20 ainsi que la rampe d'appui 21 ne sont actifs que sur une partie de la course angulaire de la première demi-coquille 11, à savoir entre la position à 0,3° et la position à 7°. Au-delà, le risque d'interférence entre la première demi-coquille 11 et le reste de la nacelle est nul du fait de la structure générale de la nacelle.

Le principe de fonctionnement est le même en ce qui concerne la seconde demi-coquille 12 et ne sera, par conséquent, pas décrit plus en détail.

Selon une variante de réalisation non représentée, la nacelle pourrait être équipée de deux rampes distinctes, chaque plot venant en appui contre une rampe.

Comme il va de soi l'invention ne se limite pas à la seule forme de réalisation de cette nacelle de turboréacteur, décrite ci-dessus à titre d'exemple, mais elle embrasse au contraire toutes les variantes dans le cadre du texte des revendications.

## Revendications

1. Nacelle de turboréacteur, destinée à équiper un aéronef, comprenant une section avant (1) d'entrée d'air, une section médiane (2) destinée à entourer une soufflante du turboréacteur, et une section arrière (3) formée à partir d'au moins une première et une seconde demi-coquilles (11, 12) montées mobiles en rotation sur un axe (A) de manière à pouvoir se déployer chacune entre une position de travail dans laquelle les demi-coquilles (11, 12) sont rapprochées l'une de l'autre et une position de maintenance dans laquelle les demi-coquilles (11, 12) sont écartées l'une de l'autre, la première demi-coquille (11) au moins étant équipée d'un premier élément suiveur (19) au niveau d'une zone située à distance de l'axe de rotation, le premier élément suiveur (19) étant conçu pour être en appui contre un premier élément de guidage (28) fixe par rapport au turboréacteur lors de la rotation de la première demi-coquille (11), la première demi-coquille (11) étant équipée d'un second élément suiveur (20), décalé angulairement du premier élément suiveur (19) par rapport à l'axe de rotation (A) de la première demi-coquille (11), conçu pour être en appui contre un second élément de guidage (29) fixe lors de la rotation de la première demi-coquille (11), **caractérisée en ce que** le premier et/ou le second éléments suiveurs (19, 20) sont conçus pour prendre appui contre le premier et/ou le second éléments de guidage (28, 29) sur une partie seulement de la course de la première demi-coquille (11), et **en ce que**, en position de travail de la nacelle, le premier et le second éléments suiveurs (19, 20) sont en retrait des premier et second éléments de guidage (28, 29).

2. Nacelle selon la revendication 1, **caractérisée en ce que** les premier et second éléments suiveurs comportent respectivement un premier et un second plots (19, 20) en saillie, les premier et second moyens de guidage comportant au moins une rampe d'appui (21) contre laquelle les premier et second plots (19, 20) prennent appui lors de la rotation de la première demi-coquille (11).

3. Nacelle selon la revendication 2, **caractérisée en ce que** la rampe d'appui est une rampe d'appui unique (21) présentant une première et une seconde sections (25, 26) disposées dans le prolongement l'une de l'autre et définissant une première et une seconde faces de guidage (28, 29) formant respectivement le premier et le second éléments de guidage, le premier plot (19) venant en appui contre la première face de guidage (28) au moins, le second plot (20) venant en appui contre la seconde face de guidage (29) au moins.

4. Nacelle selon la revendication 3, **caractérisée en ce que** les première et seconde faces de guidage (28, 29) forment un angle l'une par rapport à l'autre.

5. Nacelle selon la revendication 1, **caractérisée en ce que** la première demi-coquille est déplaçable en rotation sur une course angulaire comprise entre 40 et 60°, le premier et le second éléments suiveurs (19, 20) coopérant avec le premier et le second éléments de guidage (28, 29) sur une course angulaire comprise entre 5 et 10°, préférentiellement de l'ordre de 7 °.

6. Nacelle selon la revendication 5, **caractérisée en ce que** la position de travail est repérée par une position angulaire à 0°, la position de maintenance étant repérée par une position angulaire comprise entre 40 et 60°, les éléments suiveurs (19, 20) et les éléments de guidage (28, 29) étant agencés de sorte que le premier élément suiveur (19) prend appui contre le premier élément de guidage (28) dans une position angulaire comprise environ entre 0,3° et 4 °, le second élément suiveur (20) prenant appui contre le second élément de guidage (29) dans une position angulaire comprise environ entre 4 et 7°.

7. Nacelle selon l'une des revendication 1 à 6, **caractérisée en ce que** le premier et le second éléments de guidage (28, 29) sont fixés à un cadre fixe (14) par rapport au turboréacteur permettant de rattacher la section arrière (3) à la section médiane (2).

8. Nacelle selon la revendication 3, **caractérisée en ce que** la rampe d'appui (21) présente une première et une seconde extrémités (22, 23), les premier et second plots (19, 20) se déplaçant le long de la rampe (21) dans le sens de la première extrémité (22) vers la seconde extrémité (23), lors du déplacement de la première demi-coquille (11) depuis la position de travail vers la position de maintenance, la seconde extrémité (23) étant écartée radialement vers l'extérieur par rapport à la première extrémité (22).

9. Nacelle selon la revendication 8, **caractérisée en ce que** la seconde extrémité (23) est écartée de la première extrémité (22) en direction de la section médiane (2).

## Patentansprüche

1. Turbotriebwerksgondel, die zur Ausstattung eines Luftfahrzeugs bestimmt ist, die einem vorderen Lufteintrittsabschnitt (1), einen mittleren Abschnitt (2), der dazu bestimmt ist, ein Gebläse des Turbotriebwerks zu umgeben, und einen hinteren Abschnitt (3) umfasst, der aus mindestens einer ersten und einer zweiten Halbschale (11, 12) gebildet ist, die in Rotation beweglich um eine Achse (A) derart montiert sind, dass sie sich jeweils zwischen einer Arbeitsstellung, in der die Halbschalen (11, 12) einander angenähert sind, und einer Wartungsstellung, in der die Halbschalen (11, 12) voneinander abgespreizt sind, bewegen können, wobei mindestens die erste Halbschale (11) auf Ebene einer Zone, die sich von der Rotationsachse beabstandet befindet, mit einem ersten Verfolgungselement (19) ausgestattet ist, wobei das erste Verfolgungselement (19) ausgebildet ist, um sich bei der Rotation der ersten Halbschale (11) auf einem ersten, im Verhältnis zum Turbotriebwerk starren Führungselement (28) abzustützen, wobei die erste Halbschale (11) mit einem zweiten Verfolgungselement (20) ausgestattet ist, das winklig vom ersten Verfolgungselement (19) im Verhältnis zur Rotationsachse (A) der ersten Halbschale (11) versetzt ist, das ausgebildet ist, um bei der Rotation der ersten Halbschale (11) auf einem zweiten starren Führungselement (29) in Abstützung zu sein, **dadurch gekennzeichnet, dass** das erste und/oder das zweite Verfolgungselement (19, 20) ausgebildet sind, um sich auf dem ersten und/oder dem zweiten Führungselement (28, 29) nur auf einem Teil des Wegs der ersten Halbschale (11) abzustützen, und dass, in Arbeitsstellung der Gondel, das erste und das zweite Verfolgungselement (19, 20) vom ersten und zweiten Führungselement (28, 29) zurückgezogen sind.

2. Gondel nach Anspruch 1, **dadurch gekennzeichnet, dass** das erste und zweite Verfolgungselement jeweils einen ersten und zweiten hervorstehenden Kontakt (19, 20) aufweisen, wobei das erste und zweite Führungsmittel mindestens eine Abstützrampe (21) aufweisen, auf der sich der erste und zweite Kontakt (19, 20) bei der Rotation der ersten Halbschale (11) abstützen.

3. Gondel nach Anspruch 2, **dadurch gekennzeichnet, dass** die Abstützrampe eine einzige Abstützrampe (21) ist, die einen ersten und zweiten Abschnitt (25, 26) aufweist, die in Verlängerung zueinander angeordnet sind und eine erste und eine zweite Führungsfläche (28, 29) definieren, die jeweils das erste und das zweite Führungselement bilden, wobei sich der erste Kontakt (19) mindestens auf der ersten Führungsfläche (28) abstützt, wobei sich der zweite Kontakt (20) mindestens auf der zweiten Führungsfläche (29) abstützt.

4. Gondel nach Anspruch 3, **dadurch gekennzeichnet, dass** die erste und zweite Führungsfläche (28, 29) im Verhältnis zueinander einen Winkel bilden.

5. Gondel nach Anspruch 1, **dadurch gekennzeichnet, dass** die erste Halbschale rotierend auf einem Winkelweg zwischen 40 und 60° inklusive verlagerbar ist, wobei das erste und das zweite Verfolgungselement (19, 20) mit dem ersten und dem zweiten Führungselement (28, 29) auf einem Winkelweg zwischen 5 und 10° inklusive, vorzugsweise in der Größenordnung von 7°, zusammenarbeiten.

6. Gondel nach Anspruch 5, **dadurch gekennzeichnet, dass** die Arbeitsstellung durch eine Winkelposition bei 0° verortet ist, wobei die Wartungsstellung durch eine Winkelposition zwischen 40 und 60° inklusive verortet ist, wobei die Verfolgungselemente (19, 20) und die Führungselemente (28, 29) derart ausgebildet sind, dass sich das erste Verfolgungselement (19) auf dem ersten Führungselement (28) in einer Winkelposition zwischen zirka 0,3° und 4° inklusive abstützt, wobei sich das zweite Verfolgungselement (20) auf dem zweiten Führungselement (29) in einer Winkelposition zwischen zirka 4 und 7° inklusive abstützt.

7. Gondel nach einem der Ansprüche 1 bis 6, **dadurch gekennzeichnet, dass** das erste und das zweite Führungselement (28, 29) an einem im Verhältnis zum Turbotriebwerk starren Rahmen (14) befestigt sind, was erlaubt, den hinteren Abschnitt (3) an den mittleren Abschnitt (2) zu koppeln.

8. Gondel nach Anspruch 3, **dadurch gekennzeichnet, dass** die Abstützrampe (21) ein erstes und ein zweites Ende (22, 23) aufweist, wobei sich der erste und zweite Kontakt (19, 20) bei der Verlagerung der ersten Halbschale (11) aus der Arbeitsstellung in die Wartungsstellung entlang der Rampe (21) im Sinn des ersten Endes (22) zum zweiten Ende (23) verlagern, wobei das zweite Ende (23) im Verhältnis zum ersten Ende (22) radial nach außen abgespreizt ist.

9. Gondel nach Anspruch 8, **dadurch gekennzeichnet, dass** das zweite Ende (23) vom ersten Ende (22) in Richtung des mittleren Abschnitts (2) abgespreizt ist.

## Claims

1. A nacelle of a turbojet engine, intended to be fitted to an aircraft, comprising an air intake front section (1), a middle section (2) intended to surround a fan of the turbojet engine, and a rear section (3) formed of at least a first and a second half-shell (11, 12) mounted such that they are able to rotate about an axis (A) so that each can be deployed between a work position in which the half-shells (11, 12) are close together and a maintenance position in which the half-shells (11, 12) are distanced from one another, the first half-shell (11) at least being equipped with a first follower element (19) in a region situated some distance from an axis of rotation, the first follower element (19) being designed to bear against a first guide element (28) that is fixed with respect to the turbojet engine as the first half-shell (11) rotates, the first half-shell (11) being equipped with a second follower element (20), angularly offset from the first follower element (19) with respect to the axis of rotation (A) of the first half-shell (11), designed to bear against a second guide element (29) that is fixed as the first half-shell (11) rotates wherein the first and/or the second follower elements (19, 20) are designed to bear against the first and/or the second guide elements (28, 29) over only part of the travel of the first half-shell (11) and wherein the nacelle is in the work position, the first and second follower elements (19, 20) are set back from the first and second guide elements (28, 29).

2. The nacelle as claimed in claim 1, wherein the first and second follower elements respectively comprise a first and a second protruding lump (19, 20), the first and second guide means comprising at least one bearing ramp (21) against which the first and second lumps (19, 20) bear as the first half-shell (11) rotates.

3. The nacelle as claimed in claim 2, wherein the bearing ramp is a single bearing ramp (21) having a first and a second section (25, 26), these being positioned in the continuation of one another and defining a first and a second guide faces (28, 29) respectively forming the first and the second guide elements, the first lump (19) coming to bear against the first guide face (28) at least, the second lump (20) coming to bear against the second guide face (29) at least.

4. The nacelle as claimed in claim 3, wherein the first and second guide faces (28, 29) make an angle with one another.

5. The nacelle as claimed in claim 1, wherein the first half-shell can be rotated through an angular travel of between 40° and 60°, the first and the second follower elements (19, 20) collaborating with the first and the second guide elements (28, 29) over an angular travel of between 5° and 10° and preferably 7°.

6. The nacelle as claimed in claim 5, wherein the work position is identified by an angular position at 0°, the maintenance position being identified by an angular position at between 40° and 60°, the follower elements (19, 20) and the guide elements (28, 29) being arranged in such a way that the first follower element (19) bears against the first guide element (28) in an angular position between about 0.3° and 4°, the second follower element (20) bearing against the second guide element (29) in an angular position of between about 4° and 7°.

7. The nacelle as claimed in claim 1 to 6, wherein the first and second guide elements (28, 29) are fixed to a frame (14) that is fixed with respect to the turbojet engine, allowing the rear section (3) to be attached to the middle section (2).

8. The nacelle as claimed in claim 3, wherein the bearing ramp (21) has a first and a second end (22, 23), the first and second lumps (19, 20) moving along the ramp (21) in the direction from the first end (22) toward the second end (23) as the first half-shell (11) moves from the work position toward the maintenance position, the second end (23) being radially distanced outward with respect to the first end (22).

9. The nacelle as claimed in claim 8, wherein the second end (23) is distanced away from the first end (22) in the direction of the middle section (2).
